# EUROPÄISCHE PATENTSCHRIFT

(11) **EP 1 513 720 B1**
(45) Veröffentlichungstag und Bekanntmachung des Hinweises auf die Patenterteilung: **18.01.2006**
(21) Anmeldenummer: 03720333.8
(22) Anmeldetag: 14.03.2003
(51) Int. Cl.: B62D 7/22, B62D 1/16, F16F 15/00

(54) **LENKSÄULE MIT EINEM LENKRAD FÜR EIN KRAFTFAHRZEUG**
STEERING COLUMN COMPRISING A STEERING WHEEL FOR A MOTOR VEHICLE
COLONNE DE DIRECTION A VOLANT POUR AUTOMOBILE

(30) Priorität: 14.06.2002 DE 10226477
(43) Veröffentlichungstag der Anmeldung: 16.03.2005
(73) Patentinhaber: AUDI AG, 85045 Ingolstadt (DE)
(72) Erfinder: ANTON, Stich, 85049 Ingolstadt (DE)
(74) Vertreter: Asch, Konrad
(86) Internationale Anmeldenummer: PCT/EP2003/002664
(87) Internationale Veröffentlichungsnummer: WO 2003/106246

(56) Entgegenhaltungen:
- WO-A-02/08027
- WO-A-02/08045
- US-A- 5 687 462

## Beschreibung

Die Erfindung betrifft eine Lenksäule nach dem Oberbegriff des Anspruchs 1.

Durch Fahrbahnstöße und Motorschwingungen werden in die Fahrzeugkarosserie Vibrationen übertragen. Diese Vibrationen werden von dort auch in die Lenksäule übertragen durch entsprechende Halte- und Führungspunkte (z. B. Lenkgetriebe, Instrumententafelträger) der Lenksäule gegenüber der Karosserie. Diese Vibrationen sind vorwiegend niederfrequente Schwingungen im Bereich bis etwa 50 Hz, die der Fahrer am Lenkrad spürt. Zudem können Karosserieschwingungen über den Instrumententafelträger eingeleitet werden.

Zur Dämpfung der durch Fahrbahnstöße und Motorschwingungen erzeugten Vibrationen in der Anordnung Lenksäule/Lenkrad werden bevorzugt Schwingungstilger (DE 199 08 916 A1), z. B. in Form einer elastisch gelagerten Zusatzmasse in die Anordnung Lenksäule/Lenkrad eingebaut. Die Wirkung eines solchen Tilgers ist stets für eine definierte Frequenz bestimmt. Die Abstimmung eines bekannten Tilgers in Hinsicht auf eine Schwingungsreduktion der Anordnung Lenksäule/Lenkrad kann daher nur mit Blick auf die anregende Frequenz mit der unangenehmsten Wirkung beschränkt werden. Demzufolge kann die Schwingungsreduzierung auch nicht adaptiv auf die verschiedenen Verstellpositionen der Anordnung Lenksäule/Lenkrad und auf die Rückwirkung des Fahrers als Schnittstelle zum Lenkrad reagieren.

Die JP 2001001911 schlägt vor, im Bereich der Durchdringung der Lenksäule durch den Karosserieboden einen piezoelektrischen Aktuator an einem Kugelbauteil einer Lenksäule anzuordnen, der die auf die Lenksäule übertragenen Vibrationen koarpensieren soll. Der piezoelektrische Aktuator berührt das Kugelbauteil, so dass sich das Kugelbauteil mit Lenksäule selbständig bei einer Lenkbewegung drehen kann. Aufgrund der beständigen Vibrationen beim Fahrzeugbetrieb kann sich ein Spiel zwischen Piezoaktuator und Kugelbauteil einstellen, welches die Schwingungsreduzierung mindert. Diese Lösung berücksichtigt weiterhin nicht die aus der verstellbarkeit der Anordnung Lenksäule/Lenkrad resultierende Veränderung der Geometrie der Anordnung und berücksichtigt somit nicht das veränderliche Eigenschwingverhalten der Anordnung Lenksäule/Lenkrad.

Die bekannte Lösung vermeidet nicht die Einleitung von Vibrationen über zusätzliche Halte- und Führungspunkte der Karosserie

In der WO 02/08027 A1 ist eine Lenksäule mit einem Lenkrad nach dem Oberbegriff des Anspruchs 1 beschrieben. Bei dieser vorbekannten Lenksäule erstrecken sich Lenkradspeichen von einer, z. B. kastenförmigen, Lenkradnabe. Im Bereich der Lenkradnabe sind wenigstens ein Aktuator und ein Sensor angeordnet.

Aus der WO 02/08045 Al ist eine Lenksäule mit einem Lenkrad zu entnehmen, wobei nur der obere Bereich der Lenksäule in der Relation mit einer Armaturenwand eines Kraftfahrzeugs dargestellt ist. Es sind mehrere Aktuatoren vorgesehen, die durch eine Steuereinrichtung ansteuerbar sind. Auf S. 8 unten dieser Druckschrift ist beschrieben, dass die Aktuatoren die Funktion von Sensoren erfüllen können, jedoch ist davon auszugehen dass sie dann die Aktuator-Funktion verlieren.

Aufgabe der Erfindung ist es, in einem weiten Frequenzband an der Anordnung Lenksäule/Lenkrad die störenden Vibrationen deutlich zu reduzieren, so dass sowohl die Verstellbarkeit der Anordnung Lenksäule/Lenkrad als auch die Rückwirkung des Fahrers auf die Anordnung Lenksäule/Lenkrad adaptiv (selbstregelnd) bei geringem Aufwand berücksichtigt werden.

Diese Aufgabe wird erfindungsgemäß durch die Merkmale des Patentanspruchs 1 gelöst. Weitere Ausgestaltungen zur Erfindung sind in den Unteransprüchen angegeben.

Nach der Erfindung ist ein piezokeramischer Aktuator an der Lenksäule in einem Bereich zwischen Lenkrad und nächstliegendem Haltemittel (einem Haltemittel der Lenksäule gegenüber einem Strukturteil der Karosserie) angeordnet. Außerdem ist oberhalb dem Haltemittel und somit zwischen diesem und dem Aktuator ein Gelenk zur Verstellung der Lenksäule und dem Lenkrad angeordnet. Ausgehend vom Aktuator in Richtung Lenkrad, d. h. oberhalb des piezokeramischen Aktuators ist ein Sensor zur Erfassung von Vibrationen angeordnet. Vorteilhafter Weise kann dieser Sensor in der Schnittstelle zwischen Lenksäule und Lenkrad oder am Lenkrad selbst angeordnet sein.

Der piezokeramische Aktuator und der Sensor zur Erfassung von Vibrationen sind mit einer Regeleinrichtung verbunden. Der Sensor liefert Signale, die ein Maß für noch vorhandene Restschwingungen sind. Somit kann die Regeleinrichtung ein Stellsignal erzeugen, welches die Längsbewegung der piezokeramischen Schalen derart beeinflusst, dass eine Gegenschwingung zu den störenden Vibrationen erzeugt wird. Ziel ist es, möglichst keine Restschwingungen auf dem Übertragungspfad der Lenksäule zum Lenkrad durchzulassen.

Der piezokeramische Aktuator besteht aus einzelnen piezokeramischen Schalen, die beabstandet zueinander, entlang des Umfangs eines Lenksäulenabschnitts auf dessen Oberfläche befestigt sind. Es besteht aber auch die Möglichkeit, den piezokeramischen Aktuator aus einem Stapel von Piezoelementen zu bilden, die über den Querschnitt der Lenksäule einen Längenabschnitt der Lenksäule bilden. Der piezokeramische Aktuator wird mittels einer elektrischen Regelspannung von der Regeleinrichtung geregelt.

Die Erfindung wird nachfolgend anhand eines Ausführungsbeispiels mit den zugehörigen Zeichnungen erläutert.

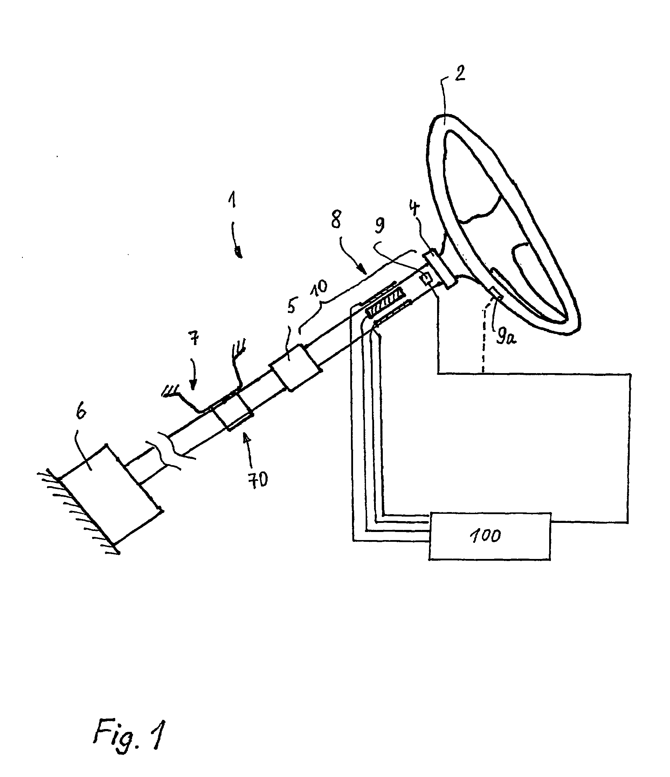

Es zeigen
- **Figur 1**: Anordnung von Lenksäule mit Haltemittel an einem Instrumententafelträger der Karosserie und Lenkrad sowie piezokeramischer Aktuator und Sensor mit Regeleinrichtung.

Wie **Fig. 1** zeigt, ist das Lenkrad 2 mit der Lenksäule 1 verbunden. An der Verbindungsstelle kann ein Gelenk 4 eingesetzt sein, welches ein Schwenken des Lenkrades 2 zwischen unterschiedlichen, arretierbaren Positionen ermöglicht.

Im weiteren beinhaltet die Lenksäule 1 ein Gelenk 5, welches es ermöglicht, die Lenksäule horizontal und/oder vertikal zu verstellen. Unterhalb dieses Gelenkes 5 ist die Lenksäule mittels Haltemittel 70 mit einem Strukturteil 7 der Karosserie, beispielsweise einem Träger für die Instrumententafel, verbunden. Über weitere Verbindungselemente oder auch direkt, ist die Lenksäule 1 zum Lenkgetriebe 6 geführt.

Um die durch das Strukturteil 7 der Karosserie mit Haltemittel 70 eingeleiteten Vibrationen am Lenkrad zu vermeiden, ist im Bereich zwischen Haltemittel 70 und Lenkrad 2 ein piezokeramischer Aktuator 8 angeordnet, vorteilhafterweise oberhalb des Gelenks 5 an der Lenksäule, im Lenksäulenabschnitt 10. Der piezokeramischer Aktuator 8 ermöglicht es, longitudinale und transversale Schwingungen in den Lenksäulenabschnitt 10 einzuleiten, um die in die Lenksäule eingeleiteten Vibrationen zu unterdrücken. Diese Unterdrückung bzw. Kompensation der störenden Vibrationen erfolgt indem der piezokeramische Aktuator 8 vorteilhafterweise oberhalb des Haltemittels 70, d. h. im Bereich zwischen Schwenkgelenk 5 und Lenkrad 2 auf der Lenksäule 1 im Abschnitt 10 angeordnet wird. Der piezokeramische Aktuator 8 besteht aus einer Piezokeramik, die als schalenförmige Piezoschicht in einem Lenksäulenabschnitt in einzelnen Piezoschichten um den Umfang der Lenksäule angeordnet ist. Beispielsweise können vier Viertelschalen 80 aus einer Piezoschicht am Umfang der Lenksäule, gegeneinander beabstandet, angeordnet werden. Diese Viertelschalen aus Piezokeramik sind über elektrische Verbindungen mit einer Regeleinrichtung 100 verbunden, die die einzelnen Viertelschalen des piezokeramischen Aktuators mit einer entsprechenden Regelspannung steuert. In Verbindung mit dieser Regelspannung bewegen sich die Viertelschalen 80 des piezokeramischen Aktuators 8 im wesentlichen in Längsrichtung zur Längsachse der Lenksäule und leiten somit in die Struktur der Lenksäule Schwingungen in Längsrichtung der Lenksäulenlängsachse ein.
Mittels des piezokeramischen Aktuators 8 werden somit geregelte Gegenschwingungen in die Anordnung Lenksäule/Lenkrad eingeleitet, die die Anordnung Lenksäule/Lenkrad zu Gegenschwingungen (in Gegenphase) anregen. Damit werden störende Schwingungen im Übertragungspfad zum Lenkrad 2 deutlich reduziert.

Die Anordnung eines Sensor 9 im Bereich eines Gelenks 4 (der Schnittstelle) zwischen Lenksäule 1 und Lenkrad 2, der ebenfalls mit der Regeleinrichtung 100 verbunden ist, wird es möglich, die Regelspannung für den Aktuator 8 in Abhängigkeit der detektierten Restschwingungen zu regeln. Der Sensor 9 ist dabei oberhalb (d. h. in Richtung Lenkrad) des piezokeramischen Aktuators 8 angeordnet. Es ist auch möglich, einen Sensor 9a direkt am Lenkrad 2 anzuordnen, als dem Ort, wo die störenden Vibrationen im wesentlichen kompensiert sein müssen. Der Sensor 9;9a ist ein Sensor zur Messung von Schwingungen. Beispielsweise kann der Sensor auch eine Piezokeramik oder eine Piezofolie sein.

Der piezokeramische Aktuator könnte auch im Lenkradkranz des Lenkrads angeordnet sein.

Die Anordnung des piezokeramischen Aktuators 8 ist nicht auf eine schalenförmige Piezokeramik oder Piezofolie beschränkt, sondern könnte auch als Stapel von Piezoelementen in die Struktur der Lenksäule 1 oder in die Schnittstelle (4) zwischen Lenksäule 1 und Lenkrad 2 integriert sein.

Der Einsatz von piezokeramischen Aktuatoren an der Lenksäule hat den Vorteil, dass auf aufwendige, schwingende Inertialmassen an der Lenksäule oder im Lenkrad verzichtet werden kann. Es ist somit eine einfachere Bauweise bei geringerem Gewicht und geringerem Platzbedarf möglich. Das reduziert den Aufwand.

## Patentansprüche

1. Lenksäule (1) mit einem Lenkrad (2) für ein Kraftfahrzeug, wobei die Lenksäule (1) in einem mit der Karosserie verbundenen Haltemittel (70) geführt ist und ein piezokeramischer Aktuator (8) und ein Sensor (9; 9a) zur Erfassung von Vibrationen oberhalb des Haltemittels (70) an der Struktur der Anordnung Lenksäule/Lenkrad angeordnet sind, **dadurch gekennzeichnet, dass** ein Gelenk (5) in der Lenksäule (1) oberhalb des Haltemittels (70) angeordnet ist, dass der piezokeramische Aktuator (8) an der Lenksäule (1) zwischen dem Gelenk (5) und dem Lenkrad (2) angeordnet ist und dass der Sensor (9; 9a) oberhalb des Aktuators (8) an der Struktur der Anordnung Lenksäule/Lenkrad angeordnet ist.

2. Lenksäule nach Anspruch 1, **dadurch gekennzeichnet, dass** der piezokeramische Aktuator (8) und der Sensor (9; 9a) mit einer Regeleinrichtung (100) verbunden sind.

3. Lenksäule nach Anspruch 1, **dadurch gekennzeichnet, dass** der piezokeramische Aktuator (8) aus einzelnen piezokeramischen Schalen besteht, die beabstandet zueinander entlang des Umfangs eines Lenksäulenabschnitts (10) auf dessen Oberfläche befestigt sind.

4. Lenksäule nach Anspruch 1, **dadurch gekennzeichnet, dass** der piezokeramische Aktuator (8) aus einem Stapel von Piezoelementen gebildet ist, der über den Querschnitt der Lenksäule (81) einen Längenabschnitt der Lenksäule (1) bildet:

## Claims

1. Steering column (1) for a motor vehicle, having a steering wheel (2), in which the steering column (1) is guided in a mounting means (70) connected with the vehicle body, and in which a piezo ceramic actuator (8) and a sensor (9; 9a) for capturing vibrations are arranged on the structure of the steering column/ steering wheel assembly upwardly of the mounting means (70), **characterised in that** a coupling (5) is arranged in the steering column (I) upwardly of the mounting means (70), and **in that** the piezo ceramic actuator (8) is arranged on the steering column (1) between the coupling (5) and the steering wheel (2), and **in that** the sensor (9; 9a) is arranged on the structure of the steering column/steering wheel assembly upwardly of the actuator (8).

2. Steering column according to claim 1, **characterised in that** the piezo ceramic actuator (8) and the sensor (9; 9a) are connected to a control device (100).

3. Steering column according to claim 1, **characterised in that** the piezo ceramic actuator (8) consists of separate piezo ceramic shells which are secured, spaced from one another, along the periphery of a section (10) of the steering column on the surface thereof.

4. Steering column according to claim 1, **characterised in that** the piezo ceramic actuator (8) is formed of a stack of piezo elements which forms a section of the length of the steering column (1) over the transverse section of the steering column (81).

## Revendications

1. Colonne de direction (1) avec un volant (2) pour un véhicule automobile, la colonne de direction (1) étant guidée dans un moyen de retenue (70) relié à la carrosserie et un actionneur piézocéramique (8) ainsi qu'un capteur (9 ; 9a) étant disposés sur la structure de l'agencement colonne de direction/volant, au-dessus du moyen de retenue (70) pour la détection de vibrations, **caractérisée en ce qu'**une articulation (5) est disposée dans la colonne de direction (1), au dessus du moyen de retenue (70), **en ce que** l'actionneur piézocéramique (8) est disposé sur la colonne de direction (1), entre l'articulation (5) et le volant (2) et **en ce que** le capteur (9 ; 9a) est disposé au-dessus de l'actionneur (8), sur la structure de l'agencement colonne de direction/volant.

2. Colonne de direction selon la revendication 1, **caractérisée en ce que** l'actionneur piézocéramique (8) et le capteur (9 ; 9a) sont reliés à un dispositif de réglage (100).

3. Colonne de direction selon la revendication 1, **caractérisée en ce que** l'actionneur piézocéramique (8) est constitué de coques piézocéramiques individuelles qui sont fixées à distance les unes des autres le long de la périphérie d'un tronçon de la colonne de direction (10), sur la surface de cette dernière.

4. Colonne de direction selon la revendication 1, **caractérisée en ce que** l'actionneur piézocéramique (8) est constitué d'une pile d'éléments piézoélectriques, qui, sur la section transversale de la colonne de direction (81) forme un tronçon longitudinal de la colonne de direction (1).
